# EUROPEAN PATENT APPLICATION

(11) **EP 2 905 418 A1**
(43) Date of publication of application: **12.08.2015**
(21) Application number: 14154665.5
(22) Date of filing: 11.02.2014
(51) Int. Cl.: E21B 3/02, E21B 17/04, F16D 1/05

(54) **Drill string component coupling device**

(71) Applicant: Sandvik Intellectual Property AB, 811 81 Sandviken (SE)
(72) Inventor: Mälstam, Johan, 803 11 Gävle (SE); Lindblom, Anders, 811 81 Sandviken (SE)

(57) **Abstract**

A drill string coupling device positionable at a joint within a drill string assembly and in particular a drive shaft forming part of a drive unit and an adaptor or axially rearwardmost part of the drill string. The coupling device comprises at least one sleeve (107) that is axially locked at one of the drill string components (100) by a plurality of engaging wedges (105) that are positioned between the sleeve (107) and the drill string component (100). A plurality of rotational stops (302) project axially from the sleeve to engage with a second component (101) of the drill string or an element attached (103, 105) to the second component to rotatably lock the two components of the drill string assembly and prevent independent rotation.

## Description

### Field of invention

The present invention relates to a drill string component coupling device positionable at a joint within a drill string assembly to rotatably couple a first drill string component to a second drill string component and in particular, although not exclusively, to a coupling device to couple the drill string to a drive unit part of the assembly.

### Background art

Rotary drilling is conventionally used for drilling mining blast holes or geothermal wells and relies on high rotational speeds and thrust on the drill bit in order to drill the hole. The rotary drill bit is advanced into the bore by successive joining of sections of pipe or rod to create a drill string. The drill rig and in particular the drive unit is located at ground level and is coupled to the drill rods via a '*bull*' shaft and an intermediate adaptor.

Drill rods, depending on their specific configuration, may weigh between ten to twenty kilograms each and measure approximately two to three meters in length. Conventionally, the drill rods are interconnected by male and female threaded connections provided at the respective rod ends. Additionally, it is typically unavoidable to have to service the drill head or other tools at the lowermost end of the drill string at regular intervals during drilling. This process involves retrieving the entire drill string from the borehole, exchanging the lowermost portion and then reinstalling the string. As will be appreciated, the rotational uncoupling or '*breakout*' of the threaded connections between the drill string components is provided by the drive unit operating in reverse. Due to a large number of breakout manipulations required, it is not uncommon for the drill string to become unintentionally decoupled from the bull shaft at the drive unit. Accidental decoupling of the string represents a significant safety hazard as the entire string becomes unanchored and may either be lost down the borehole (when lowered under gravity) or to spill uncontrollably adjacent the drive unit if in an inclined drilling orientation. Various drill pipe couplings have been proposed to try and prevent unintentional rod decoupling and examples are described in US 2,717,789; US 2,864,629 and US 3,637,238.

However, existing coupling devices suffer from a number of significant disadvantages. In particular, existing joint couplings often necessitate specific modification of the drill string components by way of radially extending flanges that are then engaged by a surrounding sleeve. Accordingly, it is often difficult and in some cases impossible to conveniently adapt existing drill string assemblies to fit a safety coupling device of the type found in the art. Additionally, conventional couplings require specific tools to enable detachment and decoupling which can be problematic if the tools become damaged or are unavailable onsite. Additionally, due to the significant torques encountered during drill string extractions, it is not uncommon for existing safety couplings to fail by becoming decoupled themselves from their region of attachment particularly where such couplings rely on threaded connections and/or are anchored inadequately onto the outside surface of the drill string components. Accordingly, what is required is a drill string assembly safety coupling device that addresses the above problems.

### Summary of the Invention

It is an objective for the present invention to provide a safety coupling device for a drill string assembly and in particular a coupling arrangement for positioning at the interface region between a drill string rotational drive unit and an axially rearward section of the drill string. It is a further specific objective of the subject invention to provide a coupling unit that may be conveniently mounted and dismounted from the drive unit and/or drill string components using readily available non-specific tools in a quick and convenient manner.

It is a further specific objective of the present invention to provide a safety joint coupling compatible for use with existing drill string drive units and drill string components without a need to specifically modify the radially outward facing regions of such units and components.

The objectives are achieved by providing a sleeve and wedge arrangement in which a coupling sleeve may be conveniently locked axially at the radially outer facing surface of a drive shaft and drill component via a convenient axial adjustment of the wedges positioned radially between the sleeve and the joint of the drive shaft and drill string component.

Advantageously, the coupling device comprises a plurality of rotational stops that projects axially forward from the locking sleeve so as to extend axially over the joint region between the two components of the drill string. The rotational stops are engaged by a part of the second component or an element attached to the second component so as to rotationally lock the drill string first component with the drill string second component.

According to a first aspect of the present invention there is provided a drill string coupling device positionable at a joint within a drill string assembly to rotatably couple a first drill string component to a second drill string component, the device comprising: a sleeve positionable around an axial end region of the first drill string component to one side of the joint between the first component and the second component; characterised by: a plurality of wedges, each wedge having a thickness between a radially inward and outward facing surface that tapers axially along a length of each wedge, the radially outward facing surface of each wedge capable of mating in contact against a radially inward facing surface of the sleeve so that each wedge is configured to be wedged in position radially between the sleeve and the first component; each of the wedges mounted to be moveable axially relative to the sleeve and the first component; at least one axial locking component to engage i) the wedges and the sleeve or ii) a part of the second component or an element attached to the second component to force the wedges in a first axial direction relative to the sleeve such that the tapered thickness of the wedges and the contact with the inward facing surface of the sleeve acts to force the radially inward facing surface of the wedges radially inward relative to the sleeve so as to allow the wedges to clamp onto the first component at the one side of the joint to lock the sleeve axially at the first component; and a plurality of rotational stops projecting axially forward from the sleeve to engage a part of the second component or an element attached to the second component to prevent independent rotation of the first component relative to the second component.

Preferably, each wedge comprises a tapered axial length that extends substantially the full length of the wedge. Preferably, an axial length of each wedge is approximately equal to an axial length of the sleeve such that the wedges, when positioned to extend radially inside the sleeve do not project axially beyond the end of the sleeve from which the rotational stops project. Preferably, each wedge comprises a flange that projects radially outward at a second end of each wedge to sit over or against a first axial end surface of the sleeve. Such an arrangement is advantageous to provide a convenient portion of the wedge to receive the axial locking component to extend axially through the flange and into the sleeve. Preferably, a thickness of each flange in the axial direction is approximately equal to a thickness of the wedge in a radial direction such that the flange is not susceptible to fracture from the main length of the wedge. Preferably, the flange and wedge are formed integrally.

Optionally, the axial locking component and the rotational stops are separate components of the coupling device; the axial locking component and the rotational stops are the same components of the coupling device; or the rotational stops are provided by axial end regions of each of the wedges configured to engage an element attached to the second component and prevent independent rotation of the first component relative to the second component. Such embodiments are advantageous to provide both the axial displacement of the sleeve relative to the wedges so as to force the wedges radially inward into clamping engagement and to provide the rotational coupling of the two drill string components via the rotational stops.

Preferably, the locking component comprises a plurality of bolts, each bolt attached to each respective wedge and the sleeve and extending axially relative to the sleeve. The bolts may be conveniently interfaced with the sleeve (and optionally the flange) via cooperating screw threads provided at the sleeve (and optionally the wedge). The use of bolts is advantageous to provide convenient manipulation by conventional tools. According to the preferred embodiment, each wedge comprises a bore or slot to receive each bolt and respective regions of the sleeve comprise respective bores or slots to receive each bolt such that an axial adjustment of each bolt relative to the sleeve acts to force each respective wedge radially inward from the sleeve. Preferably, each wedge comprises a slot that is convenient to allow radial movement of the wedge via the tapered radial thickness without affecting alignment of the bolt and creating stress within the coupling. That is, the bolt is configured to move radially within the slot of the wedge that is preferably un-threaded and/or comprises a size being greater than a diameter of the bolt to allow the bolt to move freely within the slot.

Preferably, the coupling device is formed from two primary components in the form of a first and a second half. Preferably, the device further comprises a first half having a first sleeve, a first set of wedges, at least one first axial locking component and the rotational stops; and a second half having a second sleeve, a second set of wedges and at least one second axial locking component. The rotational stops extend axially between the first and second sleeves so as to provide *'bridging components*' between the first and second halves and hence the rotational locking of the first half and the second half in turn provides the rotational locking of the first and second drill string components.

Optionally, the first half is capable of positioning around an axial end region of the drill string first component and the second half is capable of positioning around an axial end region of the drill string second component; wherein the first and second locking components are separate to provide independent axial movement of the first set of wedges relative to the second set of wedges; and the rotational stops are configured to engage the sleeve of the second component to couple the first sleeve and the second sleeve to prevent independent rotation of the first half and the second half. Advantageously, the rotational stops engage into the sleeve of the second component so as to provide a secure rotational lock and prevent decoupling of the rotational stops from the second half. Preferably, the rotational stops comprise a plurality of lugs extending from a second axial end face of the sleeve. Preferably, the lugs are realisably attached to the sleeve and the sleeve comprises a plurality of bores into which each respective lug is at least partially inserted such that an axial length section of each lug projects axially forward from the second axial end face of the sleeve. Such an arrangement is advantageous to allow the convenient coupling and decoupling of the halves of the coupling device via a straightforward alignment of the sleeves and the lugs. Any misalignment of the two halves of the device is accordingly prevented so as to provide a robust and reliable couple. Preferably, each lug is mated with each bore of each sleeve via an interference or friction fit plug-like arrangement. Optionally, the lugs may be permanently attached to one of the sleeves with the second sleeve comprising suitable bores to receive the lugs.

Preferably, the device comprises three wedges. Such an arrangement is advantageous to provide a secure attachment of the coupling device around the radially outer facing surface of the drill string component independently of any '*misshaping*' of the drill string component resultant from extended use. However, and as will be appreciated, the drill string coupling device may comprise at least three wedges. Preferably, each of the first and second halves of the coupling device comprise three respective sets of wedges.

Optionally, the axial locking components comprise a plurality of bolts and the rotational stops comprise a plurality of lugs; the locking components and the rotational stops comprise bolts that extends axially between the first and second halves; or the axial locking components comprise bolts and the rotational stops comprise axial end regions of each of the first set of wedges and axial end regions of each of the second set of wedges such that the end regions of the first and second set of wedges overlap axially.

According to a second aspect of the present invention there is provided a drill string assembly comprising: a drill string drive unit having a drive shaft to impart rotational drive to a drill string; an adaptor to be coupled axially between the drive shaft and the drill string; and a coupling device as claimed herein positioned at a joint between the drive shaft and adaptor so as to rotatably lock and prevent independent rotation of the drive shaft and the adaptor relative to one another.

Reference within the specification to a '*drive shaft'* encompasses a bull shaft or other shaft component that projects directly from the motor that imparts the rotational drive to the drill string. Additionally, the term *'drive shaft'* encompasses intermediate components positioned between the drive shaft (that extends directly from the drive unit) and the drill string including adaptors, shock absorbers and the like. Additionally, reference within the specification to '*an adaptor'* encompass components of the drill string that may be coupled directly or indirectly to the axially rearwardmost drill rod. This term encompasses reference to '*top subs*'*,* '*saver subs*'*,* drill pipes and '*shock subs'* as will be known to those skilled in the art.

The present coupling device is configured for positioning at any region between the rotational drive unit and the axially rearwardmost drill rod so as to prevent undesirable uncoupling of the two components positioned between the drive unit and the drill string.

Preferably, the coupling device is attached to the drill string assembly at the interface region between a rotational drive unit of the assembly and an axially rearward part of the drill string. Optionally, the coupling device is secured between a bull shaft that forms a part of the drive unit and an adaptor that is positioned axially between the bull shaft and an axially rearwardmost drill rod. Coupling at this region is advantageous to avoid unintentional decoupling of the drill string from the drive unit that is typically encountered via conventional drill string arrangements during drill string extractions and drill rod breakout procedures.

Preferably, where the device comprises two halves (having a first sleeve and a second sleeve with each sleeve independently axially locked by the respective sets of wedges), the first half is positioned around an axial end region of the drill string first component and the second half is positioned around an axial end region of the drill string second component. The present coupling device is advantageous via the use of a sleeve and wedge arrangement such that the total axial length of the device can be minimised to be conveniently installed at the drive unit shaft where access and available space may be restricted.

In one aspect, the coupling device may comprise a single sleeve and corresponding set of wedges that is capable of being coupled to a specifically adapted second component part of the drill string. In particular, the second component of the drill string may comprise a radially extending collar such that the rotational stops projects axially forward from the sleeve and are configured to engage the collar to couple the sleeve to the collar and prevent independent rotation of the first component (for example the drive shaft) relative to the second component (for example an adaptor or rearwardmost part of the drill string).

Optionally, the first component is a drive shaft forming a part of a drill rig configured to impart a rotational drive to the drill rods. Optionally, the second component comprises: a drill rod; or an adaptor positioned axially between the drive shaft and an axially rearwardmost drill rod.

### Brief description of drawings

A specific implementation of the present invention will now be described, by way of example only, and with reference to the accompanying drawings in which:
Figure 1 is an external perspective view of a drill string coupling device comprising a first half and a second half, with each half axially locked in position over and about end regions of tubular components of a drill string assembly so as to prevent independent rotation of the drill string components according to a specific implementation of the present invention;
Figure 2 is a further external perspective view of the coupling device of figure 1 with the second component removed for illustrative purposes;
Figure 3 is a further external perspective view of the coupling device of figure 1 with the second sleeve removed for illustrative purposes;
Figure 4 is a further perspective view of the coupling device of figure 1 with the first sleeve removed and a rotational stop component displaced for illustrative purposes.

### Detailed description of preferred embodiment of the invention

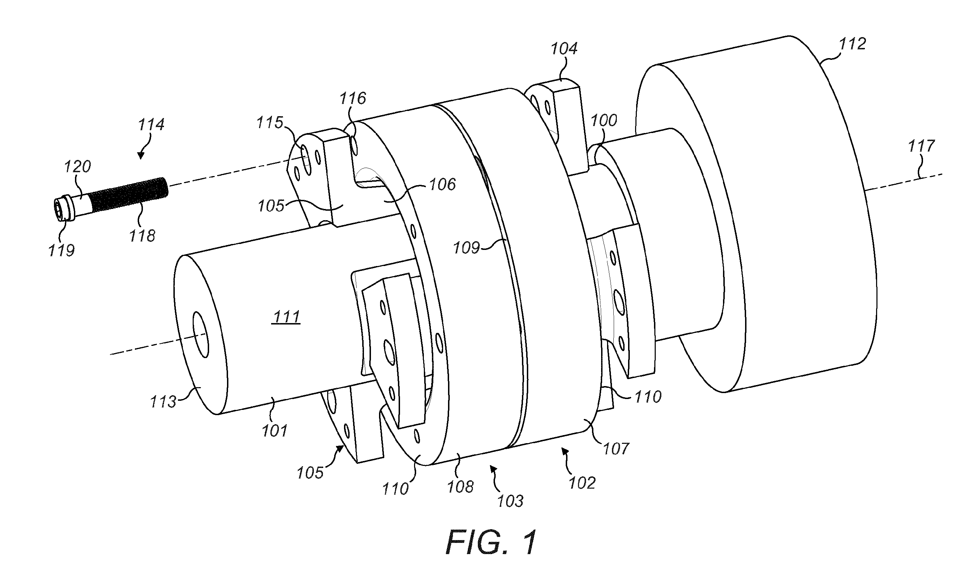

Referring to figure 1, the coupling device comprises generally a first half 102 and a second half 103 positioned at and about an axial joint between two components of a drill string assembly. In particular, the coupling device first and second halves 102, 103 are positioned respectively over a bull shaft 100 that projects axially from a drive unit (not shown) connected to bull shaft 100 at region 112. The second half 103 of the coupling device is secured over a tubular elongate adaptor 101 that is in turn secured to an axially rearwardmost drill rod (not shown) forming part of a drill string (not shown) attached to adaptor 101 at region 113. The present coupling device is configured to be axially locked at each of the cylindrical components 100, 101 and to be axially coupled such that each drill string component 100, 101 is rotatably coupled and prevented from independent rotation about axis 117.

Coupling device first half 102 comprises a first sleeve 107 and a plurality of independent wedges 105 that are positioned radially between sleeve 107 and drive shaft 100. Similarly, device second half 103 comprises a second sleeve 108 and a corresponding set of independent wedges 105 for positioning in touching contact with the radially outward facing surface 111 of cylindrical adaptor 101. Each sleeve 107, 108 is formed as a single-piece annular ring having an inside diameter being greater than an outside diameter of the respective shaft 100 and adaptor 101 so as to accommodate wedges 105 between each sleeve 107, 108 and the respective shaft 100 and adaptor 101. Each sleeve 107, 108 comprises a first end face 110 and second end face 109 with end face 109 configured for positioning opposite one another in near touching contact such that sleeves 107, 108 are co-aligned at axis 117. Accordingly, sleeve end faces 110 are respectively orientated towards drive unit (not shown) extending from drive shaft region 112 and the drill string (not shown) extending axially from adaptor end region 113.

Each of the plurality of wedges 105 comprises a main axial length 106 and a radially extending flange 104 that projects radially from one end of main length 106. Each flange 104 is configured to sit opposed to each respective sleeve end face 110 whilst wedge main length 106 is positioned radially in between each sleeve 107, 108 and the respective drive shaft 100 and adaptor 101.

Each wedge 105 is secured and axially adjustable at each respective sleeve 107, 108 via a locking bolt 114. Each half 102, 103 comprises three bolts 114 to engage and connect each respective wedge 105 to each sleeve 107, 108. Each bolt 114 comprises an elongate shaft 120 having a threaded region 118 positioned towards one end and a head 119 at an opposite end and is capable of being driven by a key or screw driver tool. Bolt 114 and in particular threaded region 118 is received within a slot 115 extending axially within wedge flange 104. Slot 115 is dimensioned and orientated in a radial direction so as to allow a relatively small radial displacement of bolt 114 during tightening and untightening. Additionally, each sleeve 107, 108 comprises a corresponding threaded bore 116 to align with wedge slot 115 such that each bolt 114 may be threaded through each respective wedge 105 to engage into each sleeve 107, 108. Accordingly, each wedge 105 may be axially adjusted relative to each respective sleeve 107, 108 via a tightening or untightening of bolt 114 at each sleeve 107, 108.

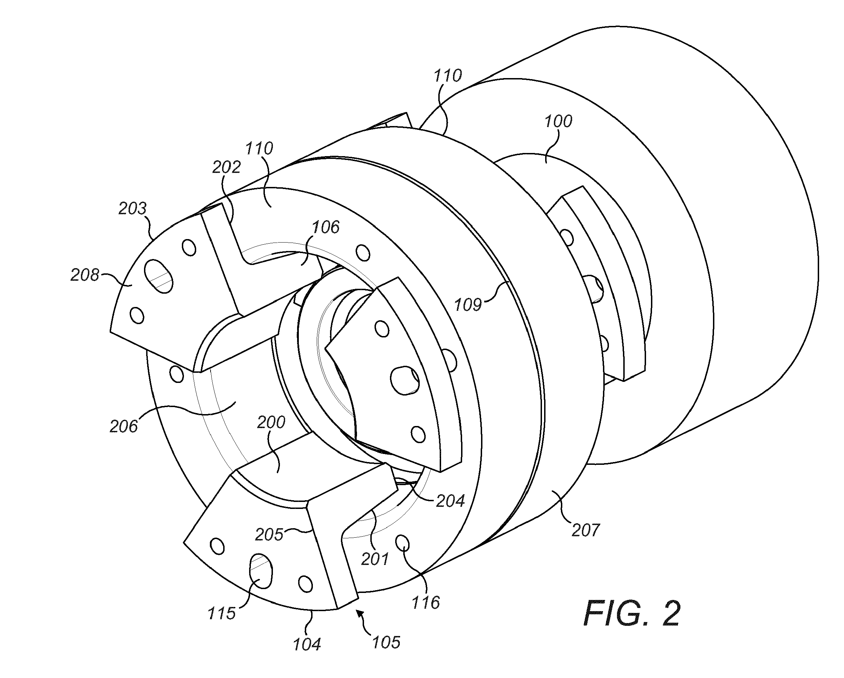

Referring to figures 2 to 4, each wedge 105 comprises a radially inward facing surface 200 and a radially outward facing surface 201 at main length 106. Each surface 200, 201 extends between a first axial end 204 and a second axial end 205. Each sleeve 107, 108 comprises a radially inward facing surface 206 and an opposite radially outward facing surface 207. Sleeve surface 206 and wedge surface 201 are configured to be positioned in touching contact when wedges 105 are positioned radially between sleeves 107, 108 and the respective shaft 100 and adaptor 101. Accordingly, each wedge surface 200 is configured for positioning in direct contact with the radially outward facing shaft surface 303 and adaptor surface 111. Additionally, each wedge flange 104 comprises a radially extending face 202 configured for positioning opposed to each sleeve end face 110. Additionally, a radially outermost end surface 203 of each wedge flange 104 is positioned substantially coplanar with each sleeve radially outer surface 207 when each wedge is positioned as illustrated in figures 1 to 4. Each wedge flange 104 additionally comprises an end surface 205 orientated away from each respective sleeve 107, 108 and each slot 115 extends completely through each wedge flange 104 between faces 205 and 202. In use, as each bolt 114 is adjusted axially via head 119, threaded regions 118 engages into the threaded bores 116. A plurality of washers or shims (not shown) are mounted between each head 119 and wedge surface 208 such that continued rotation of bolt 114 forces axially wedge 105 into closer axial engagement with the respective sleeve 107, 108.

Each wedge main length 106 (between ends 204 and 205) comprises a tapered thickness in a radial direction between surfaces 200, 201. That is, a radial thickness of each wedge is less at end 204 than end 205. Accordingly, as each bolt 114 is tightened within each respective sleeve 107, 108, the mating contact between wedge surface 201 and sleeve surface 206 forces the wedge surface 200 radially inward into clamping engagement onto the respective shaft surface 303 and adaptor surface 111. Each slot 115 is accordingly elongate in a radial direction so as to allow each flange 104 to move radially relative to bolt 114 as the wedge 105 is radially displaced via the wedging action against each respective sleeve 107, 108.

Advantageously, each half 102, 103 of the present coupling device comprises three wedges 105. Such an arrangement is advantageous to provide a uniform clamp onto the shaft and adaptor outer surfaces 303, 111 particular where shafts 100 and adaptor 101 are misshaped and non-cylindrical due to damage incurred during use.

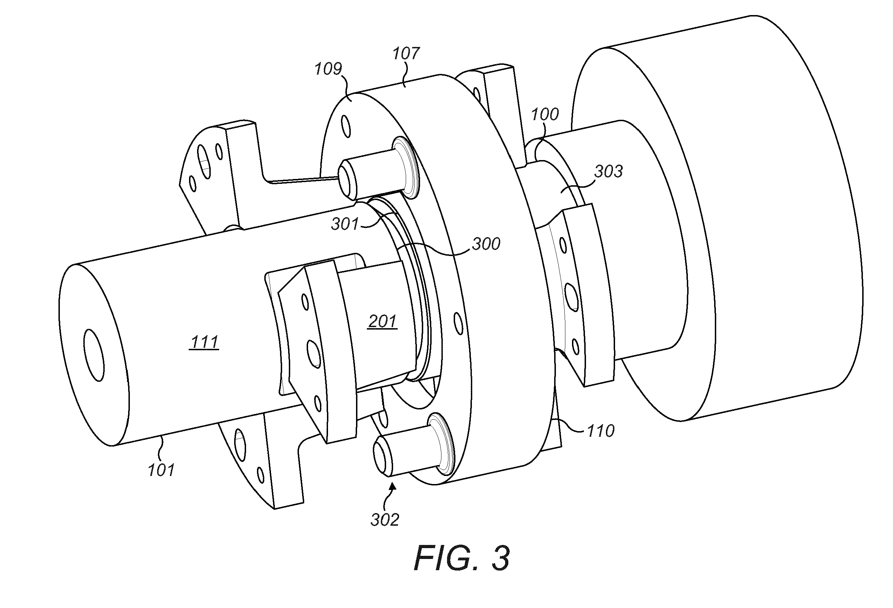

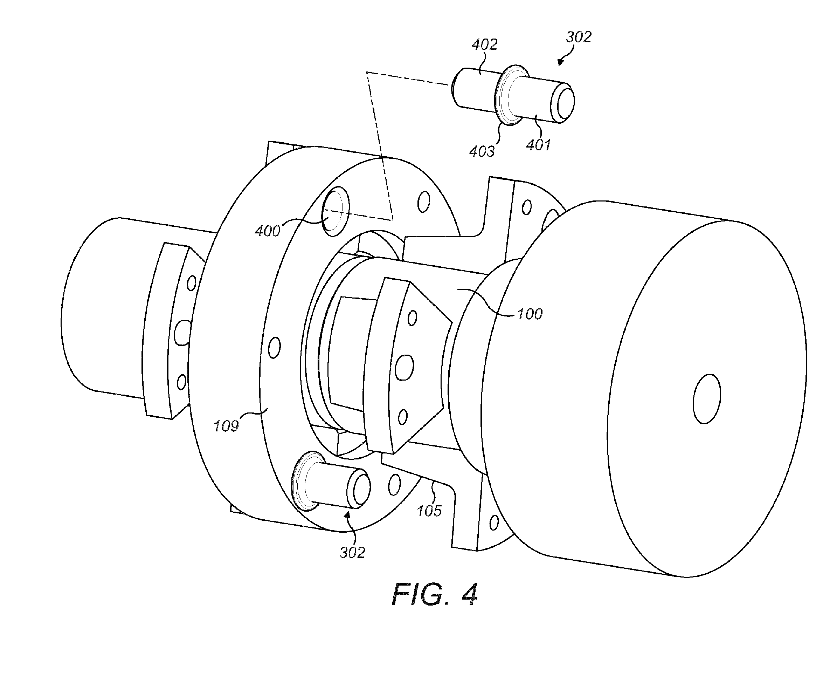

Referring to figures 3 and 4, the device further comprises a plurality of lugs 302 that extend axially between each sleeve 107, 108. Each lug 302 is formed as a double-headed pin in which a first length section 401 and a second length section 402 projects axially from a central collar 403. Accordingly, each sleeve 107, 108 comprises a plurality of respective bores 400 dimensioned so as to receive and accommodate each respective lug length section 401, 402. Accordingly, each lug 302 is removably mounted at each respective sleeve 107, 108 via friction fitting between the inner surface that defines sleeve bore 400 and the outer surface of each lug length section 401, 402. According to further embodiments, corresponding threads may be provided at each length section 401, 402 and the inner surface of bore 400. Alternatively, respective interengaging formations may be provided at each lug 302, and bore 400 such as bayonet type connections to provide a secure coupling. According to the specific implementation, three lugs 302 projects axially between each sleeve 107, 108 such that each lug collar 403 is positioned at the opposed sleeve end faces 109 that are separated from one another by the relatively short collar 403. With bolts 114 secured in position within corresponding bores 116 and each of the wedges 105 pulled into full axial engagement with each respective sleeve 107, 108, each sleeve 107, 108 is axially locked at the respective shaft 100 and adaptor 101. Additionally, the sleeves 107 and 108 are rotationally locked relative to one another such that the two halves 102, 103 form a unitary structure that is effective to rotatably couple shaft 100 and adaptor 101. That is, each half 102, 103 is positioned over and about the axial end 300 of adaptor 101 and the corresponding axial end 301 of shaft 100 such that ends 300, 301 cannot be independently rotated and accordingly adaptor 101 unintentionally decoupled from shaft 100.

According to a further specific embodiment, adaptor 101 may comprise a radially extending collar being shaped and dimensioned so as to correspond approximately to sleeve 108. The collar may comprise corresponding bores 400 to receive lugs 302 that project from the sleeve end face 109 so as to allow first half 102 to be rotatably locked at adaptor 101 via the integrally formed radial collar. According to the further embodiment, sleeve 107 of first half 102 is axially locked at shaft 100 via the same wedge and bolt arrangement 105, 114 as described with reference to figures 1 to 4.

The present coupling device is capable of securing and rotatably locking two axially adjacent components of a drill string assembly conveniently and reliably. The present coupling device may be positioned at any location between two drill string components including in particular a joint between a top sub, a bull shaft, a saver sub, a drill pipe or a shock sub forming part of a drill string as will be appreciated by those skilled in the art. The present coupling device is conveniently friction fitted over and about the external surface of the cylindrical drill string components and is adapted specifically to prevent undesirable uncoupling of the two components during drill string extractions from the borehole and breakout connections between threaded couplings of the drill string components.

According to a further specific implantation, the embodiment of figures 1 to 4 may be devoid of lugs 302. Instead, bolts 114 are configured to extend axially between the respective sleeves 107, 108 so as to function as rotational stops to rotatably lock together the respective sleeves 107, 108. In such an embodiment, each wedge 105 is devoid of each respective flange 104 such that by axially advancing each bolt 114 into sleeves 107, 108, the sleeves 107, 108 are pressed together axially. This has the effect of forcing wedges 105 radially inward onto clamping engagement with the respective surfaces 111, 303.

According to a further embodiment, the embodiment of figures 1 to 4 may be devoid of lugs 302 and comprise respective sets of wedges 105 that have a greater axial length such that the axial ends 204 of each wedge 105 extends axially forward of each sleeve 107, 108. In such an arrangement, the wedges 105 of the first half 102 may be circumferentially offset relative to the corresponding wedges 105 of the second half 103. Accordingly, the ends 204 of the wedges 105 of the first half 102 are configured to sit circumferentially between the wedge ends 204 of the second half 103. As such, the two sets of wedges 105 form an interlocking assembly that extends continuously circumferentially around each of the surfaces 111, 303 to effectively bridge the joint formed by the opposed ends 300,301. According to this further embodiment, one set of bolts 114 may extend axially between both sleeves 107, 108. Alternatively two sets of bolts 114 may be provided for each respective half 102, 103 such that the bolts 114 do not extend axially to couple both sleeves 107,108. Additionally, each wedge 105 may or may not comprise a radially extending flange 104 according to this further embodiment.

## Claims

1. A drill string coupling device positionable at a joint within a drill string assembly to rotatably couple a first drill string component (100) to a second drill string component (101), the device comprising:
a sleeve (107) positionable around an axial end region (301) of the first drill string component (100) to one side of the joint between the first component (100) and the second component (101);
**characterised by**:
a plurality of wedges (105), each wedge (105) having a thickness between a radially inward (200) and outward (201) facing surface that tapers axially along a length of each wedge (105), the radially outward facing surface (201) of each wedge (105) capable of mating in contact against a radially inward facing surface (206) of the sleeve (107) so that each wedge (105) is configured to be wedged in position radially between the sleeve (107) and the first component (100);
each of the wedges (105) mounted to be moveable axially relative to the sleeve (107) and the first component (100);
at least one axial locking component (114) to engage i) the wedges (105) and the sleeve (107) or ii) a part of the second component (101) or an element (103, 105) attached to the second component (101) to force the wedges (105) in a first axial direction relative to the sleeve (107) such that the tapered thickness of the wedges (105) and the contact with the inward facing surface (206) of the sleeve (107) acts to force the radially inward facing surface (200) of the wedges (105) radially inward relative to the sleeve (107) so as to allow the wedges (105) to clamp onto the first component (100) at the one side of the joint to lock the sleeve (107) axially at the first component (100); and
a plurality of rotational stops (302) projecting axially forward from the sleeve (107) to engage a part of the second component (101) or an element (103, 105) attached to the second component (101) to prevent independent rotation of the first component (100) relative to the second component (101).

2. The device as claimed in claim 1 wherein:
the axial locking component (114) and the rotational stops (302) are separate components of the coupling device;
the axial locking component (114) and the rotational stops (302) are the same components of the coupling device; or
the rotational stops (302) are provided by axial end regions of each of the wedges configured to engage an element (105) attached to the second component (101) and prevent independent rotation of the first component (100) relative to the second component (101).

3. The device as claimed in claims 1 or 2 wherein the locking component (114) comprises a plurality of bolts (114), each bolt (114) attached to each respective wedge (105) and the sleeve (107) and extending axially relative to the sleeve (107).

4. The device as claimed in claim 3 wherein the rotational stops (302) comprise a plurality of lugs (302) extending from a second axial end face (109) of the sleeve (107).

5. The device as claimed in claim 3 or 4 wherein each wedge (105) comprises a bore or slot (115) to receive each bolt (114) and regions of the sleeve (107) comprise respective bores (116) or slots to receive each bolt (114) such that an axial adjustment of each bolt (114) relative to the sleeve (107) acts to force each respective wedge (105) radially inward from the sleeve (107).

6. The device as claimed in any preceding claim further comprising:
a first half (102) having a first sleeve (107), a first set of wedges (105), at least one first axial locking component (114) and the rotational stops (302); and
a second half (103) having a second sleeve (108), a second set of wedges (105) and at least one second axial locking component (114).

7. The device as claimed in claim 6 wherein the first half (102) is capable of positioning around an axial end region (301) of the drill string first component (100) and the second half (103) is capable of positioning around an axial end region (300) of the drill string second component (101);
wherein the first and second locking components (114) are separate to provide independent axial movement of the first set of wedges (105) relative to the second set of wedges (105); and
the rotational stops (302) are configured to engage the sleeve (108) of the second component (101) to couple the first sleeve (107) and the second sleeve (108) to prevent independent rotation of the first half (102) and the second half (103).

8. The device as claimed in any one of claims 1 to 5 comprising three wedges (105).

9. The device as claimed in any one of claims 6 or 7 wherein the first and second set of wedges (105) each comprises three wedges (105).

10. The device as claimed in any one of claims 6, 7 or 9 wherein:
the axial locking components (114) comprise a plurality of bolts (114) and the rotational stops (302) comprise a plurality of lugs (302);
the locking components (114) and the rotational stops (302) comprise bolts (114) that extends axially between the first and second halves (102, 103); or
the axial locking components (114) comprise bolts (114) and the rotational stops (302) comprise axial end regions (204) of each of the first set of wedges (105) and axial end regions (204) of each of the second set of wedges (105) such that the end regions (204) of the first and second set of wedges (105) overlap axially.

11. A drill string assembly comprising:
a drill string drive unit having a drive shaft (100) to impart rotational drive to a drill string;
an adaptor (101) to be coupled axially between the drive shaft (100) and the drill string; and
a coupling device as claimed in any preceding claim positioned at a joint between the drive shaft (100) and adaptor (101) so as to rotatably lock and prevent independent rotation of the drive shaft (100) and the adaptor (101) relative to one another.

12. The drill string assembly as claimed in claim 11 when dependant on claim 5 wherein the first half (102) is positioned around an axial end region (301) of the drill string first component (100) and the second half (103) is positioned around an axial end region (301) of the drill string second component (101).

13. The drill string assembly as claimed in claim 11 wherein the second component (101) comprises a radially extending collar, the rotational stops projecting axially forward from the sleeve (107) and configured to engage the collar to couple the sleeve (107) to the collar and prevent independent rotation of the first component (100) relative to the second component (101).

14. The drill string assembly as claimed in any one of claims 11 to 13 wherein the first component (100) is a drive shaft forming a part of a drill rig configured to impart a rotational drive to the drill rods.

15. The assembly as claimed in claim 14 wherein the second component (101) comprises:
• a drill rod; or
• an adaptor (101) positioned axially between the drive shaft (100) an axially rearwardmost drill rod.
